Europäisches Patentamt

**European Patent Office**

Office européen des brevets

(19)

(11) Publication number: **0 050 468**
**B2**

(12) NEW EUROPEAN PATENT SPECIFICATION

(45) Date of publication of the new patent specification: **07.10.87**

(51) Int. Cl.⁴: **F 25 J 3/06, C 01 B 3/50**

(21) Application number: **81304771.9**

(22) Date of filing: **13.10.81**

(54) Separation of gas mixtures by partial condensation.

(30) Priority: **16.10.80 GB 8033468**

(43) Date of publication of application:
**28.04.82 Bulletin 82/17**

(45) Publication of the grant of the patent:
**12.12.84 Bulletin 84/50**

(45) Mention of the opposition decision:
**07.10.87 Bulletin 87/41**

(84) Designated Contracting States:
**DE FR IT NL**

(56) References cited:
**DE-A-1 551 611**
**DE-C-499 819**
**GB-A-2 009 909**
**US-A-3 373 574**
**US-A-3 914 949**

(73) Proprietor: **PETROCARBON DEVELOPMENTS LIMITED**
**Petrocarbon House Sharston Road**
**Manchester M22 4TB (GB)**

(72) Inventor: **Duckett, Melvyn**
**13 Princes Drive**
**Marple Cheshire (GB)**
Inventor: **Ashton, Gregory Joseph**
**51 Parklands Way**
**Poynton Stockport Cheshire (GB)**
Inventor: **Salisbury, David Royson**
**39 Agincourt Street**
**Heywood Lanceshire (GB)**

(74) Representative: **Cropp, John Anthony David et al**
**MATHYS & SQUIRE 10 Fleet Street**
**London, EC4Y 1AY (GB)**

EP 0 050 468 B2

# 0 050 468

**Description**

This invention is concerned with the separation of gas mixtures into two or more streams of differing composition by partial condensation at sub-ambient temperatures. It is particularly applicable when the feed mixture is available at an elevated pressure and the products of separation are themselves required to be provided at as high a pressure as possible.

A favoured procedure is to cool the feed mixture with returning cold products until a suitable portion has been liquefied, thereupon to separate liquid and vapour phases, return the vapour as one product substantially at feed pressure, expand the liquid to a lower pressure and evaporate it in countercurrent with the entering feed stream to provide cold for the process.

If this single partial condensation is inadequate to produce the required separation, further steps are needed, which may involve partial evaporation of liquid, partial condensation of vapour and/or fractional distillation. Separation products, where not required to be provided as cold liquids, are normally returned through the heat exchange system, serving to cool the feed stream.

If all the products are to be delivered in the gaseous state at ambient temperature, the Joule-Thomson effect associated with the expansion of the liquid is often adequate to supply the required refrigeration, which is limited to overcoming cold losses to the surroundings and maintaining a suitable temperature difference between feed and products at the warm end of the heat exchange system.

However, since the Joule-Thomson effect is roughly proportional to the pressure difference between compressed and expanded streams, the refrigeration requirements can be satisfied only if, with a given feed pressure, the pressure after expansion is below a certain limit. Otherwise additional refrigeration has to be provided, which may involve a work-expansion step, an external refrigeration circle or some suitable combination requiring capital expenditure and generally some consumption of utilities.

A practical cryogenic gas separation process involving partial condensation and in which refrigeration is provided entirely by Joule-Thomson expansion of condensate, has to fulfil three conditions.

1. The overall enthalpy increase of the products returning through the heat exchange system must equal the required enthalpy decrease of the feed stream.

2. At every point in the heat exchange system the temperature of the feed stream must be higher than that of the returning streams.

3. For reasons of thermodynamic efficiency the temperature difference between feed stream and returning products should be as small as is compatible with an acceptable heat exchange surface.

These conditions can be shown on a graph, in which the enthalpy (H) of the feed stream as a function of temperature (T) is plotted as a "cooling curve" and the sum of the enthalpies of the returning streams is similarly plotted as a "combined warming curve". In a practical system the two curves must have the same overall height, the warming curve must lie entirely to the left of the cooling curve, and the horizontal distance between the two curves must be small throughout the whole temperature range, but not so small as to require an inordinately large surface for heat transfer.

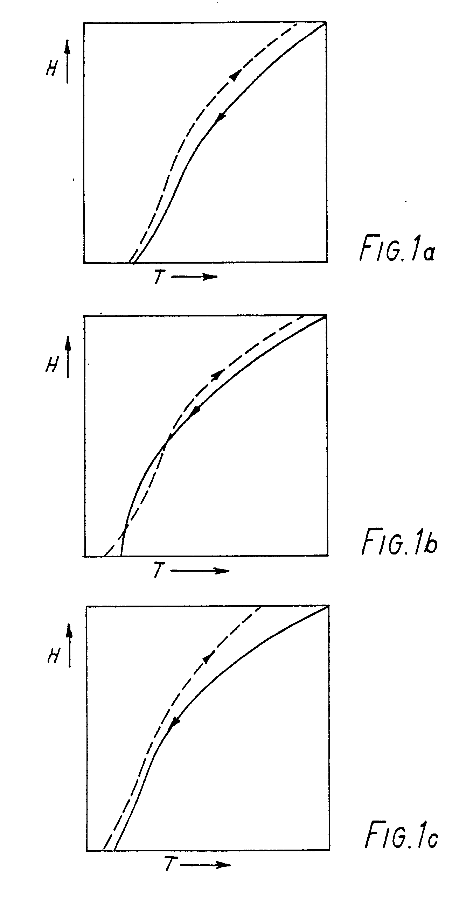

A typical example is shown in Fig. 1a of the accompanying drawings in which the warming curve is shown as a broken line and the cooling curve is shown as a continuous line.

At a sufficiently low pressure of the returning evaporated liquid stream, generally termed "tail gas", it is often possible to fulfil the first of the above cited conditions, i.e. to obtain overall thermal balance between the feed and the returning products. However, in many cases this does not lead to the fulfilment of the other two conditions. Frequently, a "crossover" occurs, in that, over a certain temperature interval, generally in the lower temperature region, the warming curve comes to lie to the right of the cooling curve, thus rendering the process inoperable. (See Fig. 1b of the drawings.)

To correct this condition while still employing the Joule-Thomson effect it becomes necessary to provide additional refrigeration at the cold end by decreasing the tail gas pressure and thus increasing the Joule-Thomson effect. This will satisfy the second requirement, eliminating the "crossover". However, as a result, the two curves will move apart at higher temperatures, leading to a large temperature difference at the warm end. Thus the third of the above conditions will not be satisfied; the plant will be "over-refrigerated" and hence inefficient. (see Fig. 1c of the drawings.)

US—A—3373574 is concerned with a process for the separation of methane and $C_2$ hydrocarbon condensibles (i.e. ethylene and ethane) from a gas mixture with hydrogen. The mixture is first cooled to about the liquefaction temperature of methane and the hydrogen gas and liquefied material separated and then in a second step the liquefied material is subjected to Joule-Thomson expansion to a sufficiently lower pressure to form a methane-rich vapour fraction and a $C_2$ hydrocarbon-enriched liquid fraction. To reduce the equilibrium content of the methane in the liquefied material condensed from the hydrogen and thereby release a larger fraction of the methane into the vapour phase in the second step of the process and hence improve the separation, the said liquefied material is rewarmed to effect partial evaporation prior to the separation by heat exchange with the cooling gas mixture and thereby provides a part of the refrigeration for the system. Further refrigeration is provided by the methane-rich vapour fraction recovered from the second step. A conventional compression-condensation closed refrigeration loop is provided to furnish any further requirement for refrigeration. US—A—3914949 is concerned with a process for liquefying natural gas and also employs a closed loop refrigeration process. Neither document addresses itself to the problem identified above and neither discloses or suggests the solution offered by the present invention

2

which involves employing a heat pump in such a manner that it provides refrigeration to (i.e. withdraws heat from) the system at a lower temperature level and removes refrigeration from (i.e. re-introduces heat into) the system at a higher temperature level.

One case to which the invention may be applied is where for a part of the temperature range through which the feed gas mixture is being cooled, the sum of the enthalpies of the returning streams is less than the enthalpy of the feed gas mixture, whereby the warming curve lies to the right of the cooling curve for said part of the temperature range, i.e. the case illustrated in Figure 1(b). Another case to which the invention may be applied, however, is where for a part of the said temperature range, the sum of the enthalpies of the returning streams, while not being less than the enthalphy of the feed gas mixture, is not sufficiently greater for the process to be operable practically, e.g. because an uneconomically high or infinite heat exchange area would be required.

Thus, according to the present invention, there is provided a method of rendering operable a process for the separation of a gas mixture at superatmospheric pressure which comprises cooling the mixture from a first temperature $T_1$ to a sub-ambient temperature $T_2$ to partially condense it, separating thus formed condensate from uncondensed vapour, subjecting separated condensate to Joule-Thomson expansion and passing thus-expanded condensate and uncondensed vapour as returning streams in indirect counter-current heat exchange relationship with the feed gas mixture to cool the latter and evaporate the expanded condensate, and which process is inoperable by reason that in a lower part of the temperature range between $T_1$ and $T_2$ the sum of the enthalpies of the said returning streams is not sufficiently greater than the enthalpy of the feed gas mixture, the method comprising providing a closed heat pump cycle in which a multi-component gaseous medium is condensed at a superatmospheric pressure $P_1$ and over a first temperature interval $\Delta T_A$ in indirect countercurrent heat exchange relationship with said returning streams whereby to introduce heat into the system comprising said feed gas mixture and returning streams, the condensed medium is expanded by Joule-Thomson expansion to a lower pressure $P_2$, the expanded condensed medium is evaporatd at pressure $P_2$ and the evaporated expanded medium is returned for recompression to pressure $P_1$ and recycle, said evaporation at $P_2$ being over a second temperature interval $\Delta T_B$ which is lower than $\Delta T_A$ and corresponds with said lower part of said temperature range, both $\Delta T_A$ and $\Delta T_B$ lying in the range defined by $T_1$ and $T_2$, said evaporation being in indirect countercurrent heat exchange relationship with said feed gas mixture and abstracting heat from the system comprising said feed gas mixture and returning streams.

By means of the invention, additional refrigeration is provided towards the cold end of the process and automatically removed towards the warm end, and by appropriate choice of the temperature intervals $\Delta T_A$ and $\Delta T_B$ and of the amount of refrigeration provided in the temperature interval $\Delta T_B$ and removed in the temperature interval $\Delta T_A$, it is possible to eliminate any "cross-over" that would otherwise occur at the lower temperatures, or resolve any difficulties due to the warming and cooling curves approaching each other too closely at such lower temperatures, without widening the gap between the warming and cooling curves at the higher temperatures.

The methods for determining the shapes of warming and cooling curves for cryogenic operations of the kind described are well known by those skilled in the art and from this knowledge the desired values for the temperature intervals $\Delta T_A$ and $\Delta T_B$ for resolving any difficulties resulting from the warming and cooling curves approaching each other too closely, or "crossing-over" at the lower temperatures, can be determined.

The composition of the multi-component gaseous mixture employed as the heat pump medium and the values for pressures $P_1$ and $P_2$ are then chosen such that at $P_1$ the medium condenses in the interval $\Delta T_A$ and at $P_2$ it evaporates in the interval $\Delta T_B$. In practice, the composition will usually be selected on a trial and error basis but as a general rule it may be said that in the most widely applicable area of the invention, namely for processes for the separation of hydrogen rich gas from a feed gas stream containing hydrogen, the heat pump medium will usually comprise a mixture of light hydrocarbons (i.e. hydrocarbons containing 1 to 4 carbon atoms) and a minor proportion of nitrogen.

The amount of refrigeration provided and removed by the heat pump medium in the intervals $\Delta T_B$ and $\Delta T_A$, respectively, may be controlled by adjustment of the volume of heat pump medium circulating and/or the rate of circulation of the medium.

In general it will be preferred to operate the partial condensation process in heat balance without the heat pump, and thus the heat pump must also be balanced; i.e. so that the heat removed in the lower temperature interval $\Delta T_B$ is equal to that introduced in the higher temperature interval $\Delta T_A$. However, if desired the heat pump may be designed and operated so that the heat removed exceeds the heat introduced, or vice versa, to balance an otherwise unbalanced process. In particular, the heat pump may be used to provide additional refrigeration.

The process of the invention is particularly appropriate for those separation processes in which both $\Delta T_A$ and $\Delta T_B$ are below ambient temperature since then the heat equivalent of the net mechanical work consumed by the heat pump cycle may conveniently be rejected to a heat sink at ambient temperature, e.g. in a cold water cooler.

Additional cooling of the compressed heat pump medium at the pressure $P_1$ and/or superheating of the evaporated heat pump medium at the pressure $P_2$ may be required to achieve condensation and/or evaporation of the heat pump medium within the desired temperature ranges.

## 0 050 468

The cooling of the feed gas mixture by the returning vapour and expanded condensate streams may be effected in a single heat exchanger or two or more exchangers which may be in series and condensate formed in any heat exchanger may be removed, if desired, before the gas mixture is passed to a subsequent exchanger.

The process is particularly but not exclusively applicable to the separation of hydrogen-rich gas streams containing hydrogen, especially those evolved in the gasification of coal or other solid hydrocarbon fuel and hydrogen-containing gas streams produced in the course of oil refining and petrochemical processes. The problem of "cross-over" tends to be particularly acute in the case of hydrogen-containing gas streams containing hydrocarbons and less than 65 mole % hydrogen, e.g. from 35 to 65 mole %.

The process overcomes the problem of avoiding "cross-over" at low temperatures without causing an undesirable widening of the gap between the warming and cooling curves at higher temperatures, and is more energy efficient than the alternative of reducing the pressure to which the condensate from the partial condensation is expanded and thereafter recompressing the evaporated condensate where it is desired to recover the tail gas at a higher pressure.

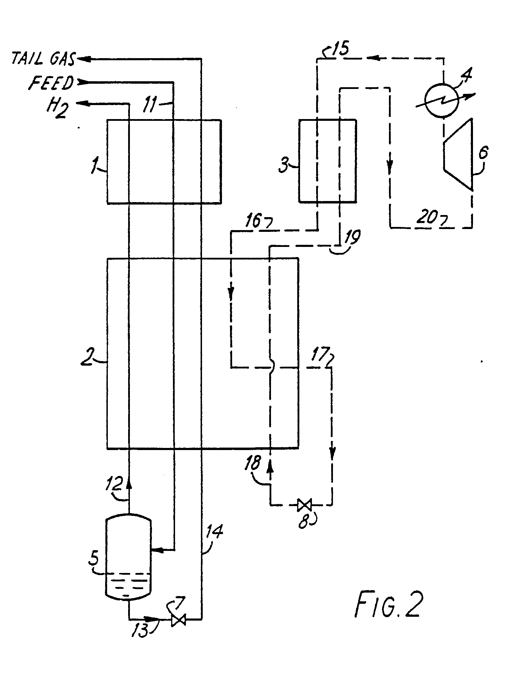

The invention is now described in greater detail with reference to one embodiment thereof and with the aid of the flow sheet illustrated in Figure 2 of the accompanying drawings and wherein the flows of the feed gas mixture and the products separated therefrom by partial condensation are indicated in full lines and the heat pump cycle is represented by a broken line. In the Figure, the numerals 1, 2, 3 and 4 denote heat exchangers, 5 is a liquid-vapour separator, 6 is a compressor, and 7 and 8 are expansion valves.

The feed gas mixture enters at super-atmospheric pressure and ambient temperature through lines 11, is cooled and partially condensed in exchangers 1 and 2, and liquid and vapour are separated in the vessel 5. For the purposes of illustrating the invention, it is assumed that it is desired to recover the vapour at a pressure close to that of the feed gas mixture and to recover the condensate at as high a pressure as possible commensurate with achieving overall balance. The vapour is therefore returned through both exchangers in line 12 without a significant drop in pressure. The condensate is expanded in valve 7 to the maximum pressure required for the overall heat balance of the process and is then returned in line 14 through exchangers 2 and 1, in which it is evaporated and warmed to near ambient temperature and recovered as tail gas.

If the resulting cooling and warming curves exhibit a cross-over as shown in Fig. 1b, the installation as so far described is not operable under these conditions and to render the plant operable it would be necessary, for example, to expand the condensate to a much lower pressure. However, if this were done, the warming and cooling curves would move far apart at the higher temperatures, e.g. as indicated in Fig. 1c, and the power required to recompress the tail gas would be excessive.

Instead, and in accordance with the invention, a much smaller compressor 6 is installed, which compresses a multi-component gaseous heat pump medium to a first pressure $P_1$. The heat of compression is rejected to cooling water in exchanger 4, and the compressed heat pump medium is passed in line 16 to enter the warm end of exchanger 2 wherein it is condensed over a first temperature interval $\Delta T_A$ (and if desired subcooled) in counter-current heat exchange relationship with the returning vapour and expanded condensate streams in lines 12 and 14. The condensed medium is withdrawn through line 17 from an intermediate point along heat exchanger 2 and the condensate is then expanded to a lower pressure $P_2$ in valve 8 and thereafter passed back through line 18 to enter the cold end of exchanger 2 wherein it is evaporated over a second temperature interval $\Delta T_B$ (which is lower than $\Delta T_A$) in indirect counter-current heat exchange relationship with the feed gas mixture flowing in line 11 and also superheated. The heat pump medium in line 18 passes back through the entire length of heat exchangere 2 and is recovered from the warm end in line 19 whence it is returned to the compressor 6 through line 20. It will be understood that the condensing heat pump medium in line 16 flows in heat exchanger 2 co-currently with the feed gas mixture in line 11 and that the evaporating heat pump medium in line 18 flows in heat exchanger 2 co-currently with the returning vapour and expanded condensate streams in lines 12 and 14, respectively.

For the heat pump medium to be at the appropriate temperature when it enters heat exchanger 2 it may be necessary to provide a precooling step upstream of heat exchanger 2. Similarly, for the evaporated heat pump medium recovered from the warm end of said heat exchanger to be at an appropriate temperature at the inlet to the compressor, it may be necessary to warm it. In the arrangement illustrated, such pre-cooling and warming is achieved in heat exchanger 3 where the compressed heat pump medium in line 15 is pre-cooled by the same medium returning at low pressure in line 19. It will be apparent to those skilled in the art that many modifications of the illustrated arrangement of heat exchangers are possible without departing from the invention. For example, heat exchanger 3 may be combined with heat exchanger 1 in the same vessel as a single multi-stream unit. Also, heat exchanger 2 may be split into two exchangers in series whereby line 16 passes through one of the exchangers and line 18 passes through both.

By this means and by appropriate choice of the composition of the heat pump medium and the pressures to which it is compressed in compressor 6 and expanded in expansion valve 8, the cooling and warming curves can be brought to the desired relative position to make the plant operable and the power

4

consumption is significantly less than would be the case if the tail gas itself were expanded to a lower pressure and recompressed.

The invention is now illustrated by the following Example.

Example

A feed gas mixture in line 11, available at 52 bar and 40°C, has the following composition:—

|                 | M%    |
| --------------- | ----- |
| $H_2$           | 57.9  |
| CO              | 1.0   |
| $CH_4$          | 25.9  |
| $C_2H_6$        | 14.4  |
| $C_2H_4$        | 0.3   |
| $C_3H_6$        | 0.4   |
| $C_3H_8$        | 0.1   |
|                 | 100.0 |

The flow rate is 14400 kg.mol/hr.

It is desired to recover a hydrogen-rich product containing 95% $H_2$ and at a delivery pressure of 51 bar. The hydrogen recovery is to be 95%. The tail gas is required to be delivered at 52 bar.

For a process relying on refrigerations solely on Joule-Thomson expansion of the condensate in line 13, it is calculated that the maximum tail gas pressure to secure overall heat balance is 15 bar. At higher tail gas pressures the refrigeration is inadequate. At a tail gas pressure of 15 bar, the plant is in overall heat balance but the cooling and warming curves cross over as illustrated in Fig. 1b. Below 215°K the cooling curve lies to the left of the warming curve, crossing back again near the lowest temperature of the process at around 118°K.

A heat pump cycle is provided as illustrated in the drawing with a heat pump medium having the following composition:

|          | mole % |
| -------- | ------ |
| $N_2$    | 9      |
| $CH_4$   | 60     |
| $C_2H_4$ | 16     |
| $C_2H_6$ | 15     |
|          | 100    |

and the flow rate of 1480 kg.mol/hr. The heat pump compressor operates between 1.5 bar at which the medium evaporates in the range 98—166°K and 25 bar ($P_1$) at which the medium condenses in the range 221—165°K. The heat pump medium enters exchanger 2 at its dew-point of 221°K, and leaves at the intermediate point, subcooled to 125°K.

The temperatures of the streams at various points in the arrangement are as follows.

**0 050 468**

| | Temperature (°K) |
|---|---|
| Feed stream in line 11: | |
| entering heat exchanger 1 | 313 |
| leaving heat exchanger 1 | 221 |
| leaving heat exchanger 2 | 118 |
| Uncondensed gas in line 12: | |
| entering heat exchanger 2 | 118 |
| leaving heat exchanger 2 | 217 |
| leaving heat exchanger 1 | 310 |
| Expanded condensate in line 14: | |
| entering heat exchanger 2 | 120 |
| leaving heat exchanger 2 | 217 |
| leaving heat exchanger 1 | 310 |
| Heat Pump Medium: | |
| H.P. in line 15 entering heat exchanger 3 | 308 |
| H.P. in line 16 entering heat exchanger 2 | 221 |
| H.P. in line 17 leaving heat exchanger 2 | 125 |
| L.P. in line 18 re-entering heat exchanger 2 | 112 |
| L.P. in line 19 leaving heat exchanger 3 | 187 |
| L.P. in line 20 leaving heat exchanger 3 | 303 |

The power consumed by the heat pump compressor is 4320 kw and the power consumed by the tail gas compressor in compressing the tail gas from 15 to 52 bar is 8300 kw, giving a total power consumption for the process of 12620 kw.

To obtain an operable plant without the heat pump, the condensate would have to be expanded to 2.5 bar. This would lead to a power consumption of 19600 kw for compressing the tail gas. Even if a part of the tail gas only is expanded to 2.5 bar and the rest to an intermediate pressure, the power consumption could be reduced to 16800 kw, but this is still significantly higher than that required using the heat pump.

In the above Example, $P_1$, the pressure at which the heat pump medium is condensed, is 25 bar and pressure $P_2$, the pressure at which the medium is evaporated, is 1.5 bar. $\Delta T_A$, the temperature interval at which the heat pump medium condenses in indirect counter-current heat exchange relationship with the returning streams, is 221—165°K. $\Delta T_B$, the temperature interval at which the same medium evaporates in indirect counter-current heat exchange relationship with the feed gas mixture, is 112°K (the temperature at which the medium re-enters heat exchanger 2 after expansion to pressure $P_2$)—166°K.

**Claims**

1. A method of rendering operable a process for the separation of a gas mixture at superatmospheric pressure which comprises cooling the mixture from a first temperature $T_1$ to a sub-ambient temperature $T_2$ to partially condense it, separating thus formed condensate from uncondensed vapour, subjecting separated condensate to Joule-Thomson expansion and passing thus-expanded condensate and uncondensed vapour as returning streams in indirect counterucrrent heat exchange relationship with the feed gas mixture to cool the latter and evaporate the expanded condensate, and which process is inoperable by reason that in a lower part of the temperature range between $T_1$ and $T_2$ the sum of the enthalpies of the said returning streams is not sufficiently greater than the enthalpy of the feed gas mixture, the method comprising providing a closed heat pump cycle in which a multi-component gaseous medium is condensed at a superatmospheric pressure $P_1$ and over a first temperature interval $\Delta T_A$ in indirect countercurrent heat exchange relationship with said returning streams whereby to introduce heat into the system comprising said feed gas mixture and returning streams, the condensed medium is expanded by Joule-Thomson expansion to a lower pressure $P_2$, the expanded condensed medium is evaporated at pressure $P_2$ and the evaporated expanded medium is returned for recompression to pressure $P_1$ and recycle, said evaporation at $P_2$ being over a second temperature interval $\Delta T_B$ which is lower than $\Delta T_A$ and corresponds with said lower part of said temperature range, both $\Delta T_A$ and $\Delta T_B$ lying in the range defined by $T_1$ and $T_2$, said evaporation being in indirect countercurrent heat exchange relationship with said feed gas mixture and abstracting heat from the system comprising said feed gas mixture and returning streams.

2. A process as claimed in claim 1 in which $\Delta T_A$ and $\Delta T_B$ are both below ambient temperature.

3. A process as claimed in claim 1 or claim 2 in which the heat given up by the condensation of the heat pump medium at the pressure $P_1$ is substantially equal to the heat absorbed by evaporation of the heat pump medium at $P_2$.

4. A process as claimed in any one of claims 1 to 3 in which the gas mixture contains hydrogen and a hydrogen-rich stream is separated therefrom.

5. A process as claimed in claim 4 in which the gas mixture is obtained by the gasification of coal or other solid hydrocarbon fuel.

6

6. A process as claimed in claim 4 in which the gas mixture is provided from a gas stream produced in the course of oil refining or of a petrochemical process.

7. A process as claimed in any one of claims 4 to 6 in which the gas mixture contains less than 65 mole % hydrogen.

8. A process as claimed in any one of claims 4 to 7 in which the multi-component heat pump medium comprises a mixture of nitrogen and light hydrocarbons in which the nitrogen is present in a minor amount.

9. A process as claimed in which the multi-component heat pump medium comprises nitrogen, methane, ethylene and ethane.

## Patentansprüche

1. Verfahren, um einen Prozeß zur Auftrennung einer Gasmischung bei Atmosphärenüberdruck arbeitsfähig zu machen, der das Abkühlen der Mischung von einer ersten Temperatur $T_1$ auf eine Subumgebungstemperatur $T_2$, um sie teilweise zu kondensieren, das Abtrennen des dabei gebildeten Kondensats von dem nicht-kondensiertem Dampf, das Unterwerfen des abgetrennten Kondensates einer Joule-Thomson-Expansion und das Führen des auf diese Weise expandierten Kondensats und des nichtkondensierten Dampfes als Rückführungsströme im indirekten Gegenstrom-Wärmeaustausch mit einer Ausgangs-Gasmischung, um letztere abzukühlen und das expandierte Kondensat zu verdampfen, umfaßt, das nicht arbeitsfähig ist, weil in einem niedrigeren Bereich des Temperaturbereiches zwischen $T_1$ und $T_2$ die Summe der Enthalpien der Rückführungsströme nicht ausreichend größer ist als die Enthalpie der Ausgangs-Gasmischung, das die Anwendung eines geschlossenen Wärmepumpenkreislaufs, in dem ein gasförmiges Mehrkomponenten-Medium bei einem Atmosphärenüberdruck $P_1$ und über einem ersten Temperaturintervall $\Delta T_A$ in indirektem Gegenstrom-Wärmeaustausch mit den Rückführungsströmen kondensiert wird, wobei in das System, das die Ausgangs-Gasmischung und die Rückführungsströme umfaßt, Wärme zugeführt wird, umfaßt, das kondensierte Medium durch Joule-Thomson-Expansion auf einen niedrigeren Druck $P_2$ expandiert wird, das expandierte kondensierte Medium bei einem Druck $P_2$ verdampft wird und das verdampfte expandierte Medium zur Rekompression auf den Druck $P_1$ und Rückführung im Kreislauf zurückgeführt wird, wobei die Verdampfung bei $P_2$ über einem zweiten Temperaturintervall $\Delta T_B$, das niedriger ist als $\Delta T_A$ und dem niedrigeren Bereich des genannten Temperaturbereichs entspricht, erfolgt, wobei sowohl $\Delta T_A$ als auch $\Delta T_B$ innerhalb des durch $T_1$ und $T_2$ definierten Bereiches liegen und wobei die Verdampfung in indirektem Gegenstrom-Wärmeaustausch mit der Ausgangs-Gasmischung erfolgt und wobei Wärme aus dem System, das die Ausgangs-Gasmischung und die Rückführungsströme umfaßt, entzogen wird.

2. Verfahren nach Anspruch 1, worin sowohl $\Delta T_A$ als auch $\Delta T_B$ unter Umgebungstemperatur liegen.

3. Verfahren nach Anspruch 1 oder 2, worin die durch die Kondensation des Wärmepumpenmediums bei dem Druck $P_1$ abgegebene Wärme im wesentlichen gleich der Wärme ist, die durch Verdampfung des Wärmepumpenmediums bei $P_2$ absorbiert wird.

4. Verfahren nach einem der Ansprüche 1 bis 3, worin die Gasmischung Wasserstoff enthält und ein an Wasserstoff reicher Strom davon abgetrennt wird.

5. Verfahren nach Anspruch 4, worin die Gasmischung durch Vergasen von Kohle oder eines anderen festen Kohlenwasserstoffbrennstoffes erhalten wurde.

6. Verfahren nach Anspruch 4, worin die Gasmischung aus einem Gasstrom stammt, der im Verlaufe der Ölraffinierung oder eines petrochemischen Prozesses gebildet wurde.

7. Verfahren nach einem der Ansprüche 4 bis 6, worin die Gasmischung weniger als 65 Mol-% Wasserstoff enthält.

8. Verfahren nach einem der Ansprüche 4 bis 7, worin das Mehrkomponenten-Wärmepumpenmedium eine Mischung aus Stickstoff und leichten Kohlenwasserstoffen umfaßt, worin der Stickstoff in einer geringeren Menge vorliegt.

9. Verfahren nach Anspruch 8, worin das Mehrkomponenten-Wärmepumpenmedium Stickstoff, Methan, Ethylen und Ethan umfaßt.

## Revendications

1. Procédé permettant le fonctionnement d'un processus de séparation d'un mélange gazeux à une pression supérieure à la pression atmosphérique qui comprend le refroidissement du mélange d'une première température $T_1$ à une température $T_2$ inférieure à l'ambiance de manière à le condenser partiellement, la séparation du condensat ainsi formé de la vapeur non condensée, la soumission du condensat séparé à une détente Joule-Thomson et le passage du condensat ainsi détendu et de la vapeur non condensée sous la forme de flux de retour en relation d'échange indirect de chaleur à contré-courant avec le mélange gazeux d'alimentation de manière à refroidir ce dernier et à évaporer le condensat détendu, ce processus ne pouvant fonctionner du fait que, dans une partie inférieure de la plage de température entre $T_1$ et $T_2$, la somme des enthalpies du flux de retour n'est pas suffisamment supérieure à l'enthalpie du mélange gazeux d'alimentation, le procédé comprenant l'utilisation d'un cycle fermé de pompe de chaleur dans lequel un fluide gazeux multi-composants est condensé à une pression $P_1$

7

supérieure à la pression atmosphérique et sur un premier intervalle de température $\Delta T_A$ en relation d'échange indirect de chaleur à contre-courant avec lesdits flux de retour de manière à introduire de la chaleur dans le système comprenant ledit mélange gazeux d'alimentation et les flux de retour, le fluide condensé est détendu par détente Joule-Thomson à une pression inférieure $P_2$, le fluide condensé détendu est évaporé à une pression $P_2$ et le fluide détendu évaporé est renvoyé pour recompression à la pression $P_1$ et recyclage, ladite évaporation à $P_2$ s'effectuant sur un deuxième intervalle de température $\Delta T_B$ qui est plus bas que $\Delta T_A$ et correspond à ladite partie inférieure de ladite plage de température, $\Delta T_A$ et $\Delta T_B$ se trouvant tous deux dans la plage définie par $T_1$ et $T_2$, ladite évaporation étant en relation d'échange indirect de chaleur à contre-courant avec ledit mélange gazeux d'alimentation et retirant de la chaleur du système composé dudit mélange gazeux d'alimentation et des flux de retour.

2. Procédé suivant la revendication 1, dans lequel $\Delta T_A$ et $\Delta T_B$ sont tous deux au-dessous de la température ambiante.

3. Procédé suivant la revendication 1 ou 2, dans lequel la chaleur abandonnée par la condensation du fluide de pompe de chaleur à la pression $P_1$ est sensiblement égale à la chaleur absorbée par l'évaporation du fluide de pompe de chaleur à $P_2$.

4. Procédé suivant l'une quelconque des revendications 1 à 3, dans lequel le mélange gazeux contient de l'hydrogène et un flux riche en hydrogène est séparé de ce mélange.

5. Procédé suivant la revendication 4, dans lequel le mélange gazeux est obtenu par la gazéification du charbon ou d'un autre combustible hydrocarboné solide.

6. Procédé suivant la revendication 4, dans lequel le mélange gazeux provient d'un flux de gaz produit au cours du raffinage du pétrole ou d'un traitement pétrochimique.

7. Procédé suivant l'une quelconque des revendications 4 à 6, dans lequel le mélange gazeux contient moins de 65 moles % d'hydrogène.

8. Procédé suivant l'une quelconque des revendications 4 à 7, dans lequel le fluide multicomposants de pompe de chaleur est constitué par un mélange d'azote et d'hydrocarbures légers dans lequel l'azote est présent en faible quantité.

9. Procédé suivant la revendication 8, dans lequel le fluide multicomposants de pompe de chaleur comprend de l'azote, du méthane, de l'éthylène et de l'éthane.

FIG.1a

FIG.1b

FIG.1c

FIG. 2

0 050 468

2